# EUROPEAN PATENT APPLICATION

(11) **EP 4 726 699 A1**
(43) Date of publication of application: **15.04.2026**
(21) Application number: 24845868.9
(22) Date of filing: 09.07.2024
(51) Int. Cl.: G09B 25/02, G09B 9/00, G05B 19/418

(54) **SIMULATION SYSTEM, OPERATION METHOD OF SIMULATION SYSTEM, AND SIMULATION MANAGEMENT SYSTEM**

(30) Priority: 27.07.2023 KR 20230098545
(71) Applicant: LG Energy Solution, Ltd., Seoul 07335 (KR)
(72) Inventor: KIM, Dae Cheon, Daejeon 34122 (KR); PARK, Dae Hyun, Daejeon 34122 (KR); KIM, Jong Seong, Daejeon 34122 (KR)
(74) Representative: BCKIP Part mbB
(86) International application number: PCT/KR2024/009740
(87) International publication number: WO 2025/023565

(57) **Abstract**

According to some embodiments disclosed in the present document, a simulation system includes an interface panel configured to receive a manipulation input from an operator, a main simulation device configured to load training content for simulating a battery manufacturing process on the basis of the operation input and provide the training content to the operator through interaction with the operator, and a display configured to display a detailed image of the battery manufacturing process on the basis of characteristics of the training content.

## Description

### [TECHNICAL FIELD]

### CROSS-REFERENCE TO RELATED APPLICATION

This application claims priority to and the benefit of Korean Patent Application No. 10-2023-0098545 filed in the Korean Intellectual Property Office on July 27, 2023, the entire contents of which are incorporated herein by reference.

### TECHNICAL FIELD

Embodiments disclosed herein relate to a simulation system, an operating method of the simulation system, and a simulation management system.

### [BACKGROUND ART]

Recently, research and development on secondary batteries has been actively conducted. Here, the secondary battery is a battery capable of charging and discharging and may be construed as including all recent lithium ion batteries such as conventional Ni/Cd batteries and Ni/MH batteries. Among secondary batteries, lithium ion batteries may have a higher energy density than conventional Ni/Cd batteries, Ni/MH batteries, etc. and may be manufactured in a compact and lightweight manner, and thus may have high usability in terms of power sources for mobile devices. Recently, the lithium-ion batteries are attracting attention as a next-generation energy storage medium as a range of use expands to a power source for an electric vehicle.

Since a manufacturing process of the secondary battery includes a plurality of detailed assembly processes and inspection operations, new operators may learn the manufacturing process with the help of skilled operators. However, when there is a lack of skilled operators for a newly introduced process line or when there is a language barrier to operator training in an overseas factory, a simulation that reproduces a battery manufacturing process in the same manner as it is in the real world may be used for operator training. Meanwhile, since structures or manufacturing methods of the battery are being developed at a rapid pace, training simulations may also be required to be developed together.

### [DISCLOSURE]

### [TECHNICAL PROBLEM]

Embodiments disclosed herein are directed to providing a simulation system, an operation method of the simulation system, and a simulation management system, which may allow an operator to learn a manufacturing process of a cylindrical battery through simulation.

The technical objects of embodiments disclosed herein are not limited to the above-described objects, and other objects that are not described will be able to be clearly understood by those skilled in the art from the following descriptions.

### [TECHNICAL SOLUTION]

According to some embodiments disclosed herein, a simulation system includes an interface panel configured to receive a manipulation input from an operator, a main simulation device configured to load a training content that reproduces a battery manufacturing process based on the manipulation input and provide the training content to the operator through interaction with the operator, and a display configured to display a detailed image of the battery manufacturing process based on characteristics of the training content.

According to some embodiments, the battery manufacturing process includes cylindrical processes sequentially performed to manufacture a cylindrical battery, and the training content includes at least any one of a process guide content, an equipment operation content, a quality inspection content, and a process condition adjustment content for the cylindrical processes.

According to some embodiments, the main simulation device is configured to display, to the operator, a first state in which virtual cylindrical parts assembled in the cylindrical processes are changed in response to a touch input of the operator to provide the process guide content, and the display is configured to display invisible areas of the virtual cylindrical parts in the first state.

According to some embodiments, the main simulation device is configured to evaluate assembly quality of the virtual cylindrical parts based on the first state and calculate an expected defect rate of the cylindrical battery based on the assembly quality of each of the cylindrical processes.

According to some embodiments, the main simulation device is configured to select a representative defect case among the cylindrical processes based on the assembly quality and the expected defect rate and provide the operator with an additional training content for the representative defect case.

According to some embodiments, the main simulation device is configured to display, to the operator, a second state in which a plurality of virtual cylindrical equipment configured to perform the cylindrical processes are operated in response to a touch input of the operator to provide the equipment operation content, and the display is configured to display invisible areas of the plurality of virtual cylindrical equipment in the second state.

According to some embodiments, wherein the main simulation device is configured to display, to the operator, a third state in which a sample of assembly resulting products of the virtual cylindrical parts assembled in the cylindrical processes is collected in response to the touch input of the operator to provide the quality inspection content, and the display is configured to display a quality determination area of the sample inspected to inspect quality of the assembly resulting products.

According to some embodiments, the main simulation device is configured to display changes in operation forms of a plurality of virtual cylindrical equipment to the operator according to changes in process conditions of the cylindrical processes set in response to the touch input of the operator to provide the process condition adjustment content, and the display is configured to display changes in process resulting product of the cylindrical processes according to the changes in operation forms.

According to some embodiments disclosed herein, an operating method of a simulation system includes receiving a manipulation input from an operator, loading a training content that reproduces a battery manufacturing process based on the manipulation input, providing the training content to the operator through interaction with the operator, and displaying a detailed image of the battery manufacturing process based on characteristics of the training content.

According to some embodiments, the battery manufacturing process includes cylindrical processes sequentially performed to manufacture a cylindrical battery, and the training content includes at least any one of a process guide content, an equipment operation content, a quality inspection content, and a process condition adjustment content for the cylindrical processes.

According to some embodiments, the step of providing of the training content includes displaying, to the operator, a first state in which virtual cylindrical parts assembled in the cylindrical processes are changed in response to a touch input of the operator to provide the process guide content, and the step of displaying of the detailed image includes displaying invisible areas of the virtual cylindrical parts in the first state.

According to some embodiments, the step of providing of the training content includes evaluating assembly quality of the virtual cylindrical parts based on the first state, and calculating an expected defect rate of the cylindrical battery based on the assembly quality of each of the cylindrical processes.

According to some embodiments, the step of providing of the training content further includes selecting a representative defect case among the cylindrical processes based on the assembly quality and the expected defect rate, and providing an additional training content for the representative defect case to the operator.

According to some embodiments, the step of providing of the training content includes displaying, to the operator, a second state in which a plurality of virtual cylindrical equipment configured to perform the cylindrical processes are operated in response to a touch input of the operator to provide the equipment operation content, and the step of displaying of the detailed image includes displaying invisible areas of the a plurality of virtual cylindrical equipment in the second state.

According to some embodiments, the step of providing of the training content includes displaying, to the operator, a third state in which a sample of assembly resulting products of virtual cylindrical parts assembled in the cylindrical processes is collected in response to a touch input of the operator to provide the quality inspection content, and the step of displaying of the detailed image includes displaying a quality determination area of the sample inspected to inspect quality of the assembly resulting products.

According to some embodiments, the step of providing of the training content includes displaying changes in operation forms of a plurality of virtual cylindrical equipment to the operator according to changes in process conditions of the cylindrical processes set in response to the touch input of the operator to provide the process condition adjustment content, and the step of displaying of the detailed image includes displaying changes in process resulting products of the cylindrical processes according to the changes in operation forms.

According to some embodiments disclosed herein, a simulation management system includes a simulation system configured to receive a manipulation input from an operator, load a training content that reproduces a battery manufacturing process based on the manipulation input, provide the training content to the operator through interaction with the operator, and display a detailed image of the battery manufacturing process based on characteristics of the training content, and a simulation management server configured to manage the training content.

According to some embodiments, the battery manufacturing process includes cylindrical processes sequentially performed to manufacture a cylindrical battery, and the training content includes at least any one of a process guide content, an equipment operation content, a quality inspection content, and a process condition adjustment content for the cylindrical processes.

According to some embodiments, the simulation system is configured to display, to an operator, a first state in which virtual cylindrical parts assembled in the cylindrical processes are changed in response to a touch input of the operator to provide the process guide content and display invisible areas of the virtual cylindrical parts in the first state.

According to some embodiments, the simulation system is configured to evaluate assembly quality of the virtual cylindrical parts based on the first state and calculate an expected defect rate of the cylindrical battery based on the assembly quality of each of the cylindrical processes.

According to some embodiments, the simulation system is configured to select a representative defect case among the cylindrical processes based on the assembly quality and the expected defect rate and provide the operator with an additional training content for the representative defect case.

According to some embodiments, the simulation system is configured to display, to the operator, a second state in which a plurality of virtual cylindrical equipment configured to perform the cylindrical processes are operated in response to a touch input of the operator to provide the equipment operation content and display invisible areas of the a plurality of virtual cylindrical equipment in the second state.

According to some embodiments, the simulation system is configured to display, to the operator, a third state in which a sample of assembly resulting products of the virtual cylindrical parts assembled in the cylindrical processes is collected in response to the touch input of the operator to provide the quality inspection content and display a quality determination area of the sample inspected to inspect quality of the assembly resulting products.

According to some embodiments, the simulation system is configured to display changes in operation forms of a plurality of virtual cylindrical equipment to the operator according to changes in process conditions of the cylindrical processes set in response to the touch input of the operator to provide the process condition adjustment content and display changes in process resulting product of the cylindrical processes according to the changes in operation forms.

### [ADVANTAGEOUS EFFECTS]

According to the embodiments disclosed herein, it is possible to provide the simulation system, the operation method of the simulation system, and the simulation management system, which may allow the operator to learn the manufacturing process of the cylindrical battery through simulation.

The technical effects according to the embodiments disclosed herein are not limited to the above-described effects, and other effects that are not described will be able to be clearly understood by those skilled in the art according to the disclosure of the present document.

### [DESCRIPTION OF DRAWINGS]

FIG. 1 may show elements constituting a simulation management system according to some embodiments.
FIG. 2 may show elements constituting a simulation system according to some embodiments.
FIG. 3 may show a form in which the elements constituting the simulation system according to some embodiments are implemented.
FIG. 4 may show a form in which an interface panel according to some embodiments is operated.
FIG. 5 may show a form in which a main simulation device according to some embodiments is operated.
FIG. 6 may show a form in which a display according to some embodiments is operated.
FIG. 7 may show a structure of the main simulation device according to some embodiments.
FIG. 8 may show details of a training content according to some embodiments.
FIG. 9 may show operations constituting an operating method of the simulation system according to some embodiments.

### [MODE FOR INVENTION]

Hereinafter, embodiments disclosed herein will be described with reference to the accompanying drawings. However, it should be understood that this is not intended to limit the disclosure of the present document to specific embodiments and includes various modifications, equivalents, and/or alternatives of the embodiments described herein.

It should be understood that the embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. Terms such as "1st," "2nd," "first," "second," "A," "B," "(a)," or "(b)" may simply be used to distinguish the corresponding component from another and do not limit the corresponding components in another aspect (e.g., importance or order).

In the present document, when a certain (e.g., a first) component is described as being "coupled," "connected," or "joined" to another (e.g., a second) component with or without the terms "functionally" or "communicatively" or "coupled" or "connected," this means that the certain component may be connected to another component directly (e.g., in a wired or wireless manner) or indirectly (e.g., through a third component).

A method according to various embodiments disclosed herein may be provided by being included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through application stores or directly online between two user devices. In the case of the online distribution, at least some of the computer program products may be at least temporarily stored or temporarily generated in a device-readable storage medium such as a memory of a server of a manufacturer, a server of an application store, or a relay server.

According to the embodiments disclosed herein, each component (e.g., a module or program) of the above-described components may include a single object or a plurality of objects, and some of the plurality of objects may be separately disposed in another component. According to the embodiments disclosed herein, one or more of the above-described corresponding components or operations may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to the embodiments disclosed herein, operations performed by modules, programs, or other components may be executed sequentially, in parallel, repeatedly, or heuristically, or one or more of the operations may be executed in a different order or omitted, or one or more other operations may be added.

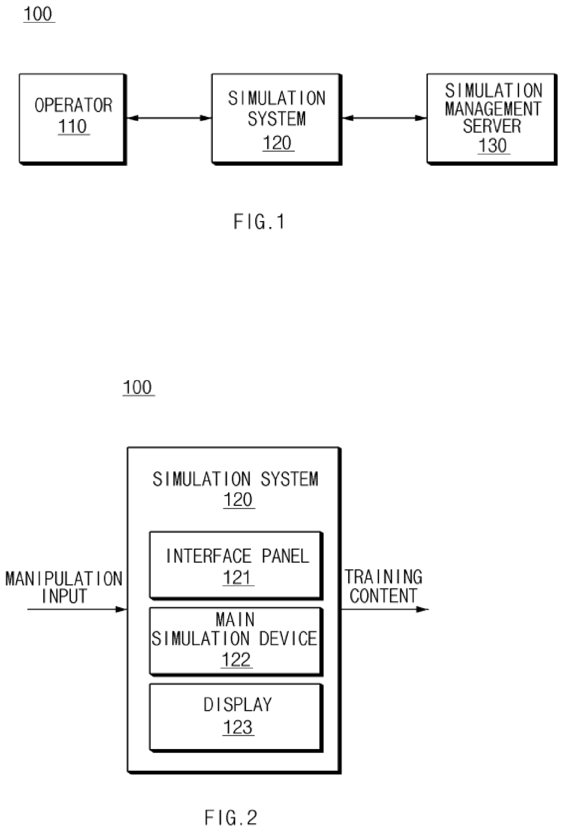

FIG. 1 may show elements constituting a simulation management system according to some embodiments.

Referring to FIG. 1, a simulation management system 100 may include a simulation system 120 and a simulation management server 130. However, the present document is not limited thereto, and some components may be omitted from the simulation management system 100, or other general-purpose components may be further included in the simulation management system 100.

The simulation management system 100 may provide simulation training about a battery manufacturing process to an operator 110. According to an embodiment, the battery manufacturing process may include a manufacturing process of a cylindrical battery. The operator 110 may virtually experience the battery manufacturing process through interaction with the simulation system 120.

The simulation management server 130 may be configured to manage a training content provided by the simulation system 120. The simulation management server 130 may record the performance results of the training content, derive statistical data based on the same, add or change the content of the training content based on the statistical data, and transmit the added or changed information to the simulation system 120. According to an embodiment, the simulation management server 130 may install content management software in the simulation system 120 and provide update information of the content management software.

FIG. 2 may show elements constituting a simulation system according to some embodiments.

Referring to FIG. 2, the simulation system 120 may include an interface panel 121, a main simulation device 122, and a display 123. However, the present document is not limited thereto, and some components may be omitted from the simulation system 120, or other general-purpose components may be further included in the simulation system 120.

According to an embodiment, in the simulation system 120, the interface panel 121, the main simulation device 122, and the display 123 may be electrically connected through a device-to-device communication method such as a bus, a general purpose input and output (GPIO), a serial peripheral interface (SPI), or a mobile industry processor interface (MIPI).

The interface panel 121 may provide an interface function between the operator 110 and the simulation system 120. For example, the interface panel 121 may receive a manipulation input for manipulating the simulation system 120 from the operator 110 through a touch input, a button input, an input through an input device such as a mouse, etc. and display a graphic interface such as a screen that assists selection of the manipulation input. According to an embodiment, the interface panel 121 may include a human machine interface (HMI) panel.

The main simulation device 122 may be configured to execute simulation about cylindrical battery manufacturing. The main simulation device 122 may interact with the operator 110 to perform the simulation. For example, the main simulation device 122 may receive a touch input or drag input from the operator 110, change an assembly state of a virtual battery accordingly, and display the changed assembly state to the operator 110. The main simulation device 122 may include a processor and memory for executing simulation software.

The processor of the main simulation device 122 may have a structure for executing commands that implement the operations of the main simulation device 122. The processor may be implemented as an array of multiple logic gates or a general-purpose microprocessor for processing various calculations and configured as a single processor or a plurality of processors. For example, the processor may be implemented in the form of at least one of a microprocessor, a CPU, a GPU, and an AP.

The memory or a storage may be configured to temporarily store data or commands and may be configured separately or integrally with the processor. The processor may process various calculations by executing the commands stored in the memory and/or the storage. The memory and/or the storage may store various pieces of data, commands, mobile applications, computer programs, etc. For example, the memory and/or the storage may be implemented as a non-volatile device such as a ROM, a PROM, an EPROM, an EEPROM, a flash memory, a PRAM, an MRAM, a RRAM, or an FRAM, or a volatile device such as a DRAM, an SRAM, an SDRAM, or a PRAM, and implemented in the form of an HDD, an SSD, an SD, a Micro-SD, or a combination thereof.

The display 123 may include a display device for providing various pieces of visual information to the operator 110. The display 123 may display images of the simulation being executed on the main simulation device 122. For example, when the manufacturing process of the cylindrical battery is performed in the main simulation device 122, an external image of the corresponding process that can be visually recognized may be displayed on the main simulation device 122, and an image of an invisible image of the process that cannot be recognized may be displayed on the display 123.

The interface panel 121 of the simulation system 120 may be configured to receive the manipulation input from the operator 110. The operator 110 may generate the manipulation input through a touch input, a button input, a mouse input, etc. The manipulation input may be used to drive the main simulation device 122, select items, adjust process conditions, etc. According to an embodiment, the interface panel 121 may be manipulated in the same manner as an equipment manipulation panel used in an actual manufacturing line.

The main simulation device 122 of the simulation system 120 may be configured to load a training content that reproduces the battery manufacturing process based on the manipulation input. For example, the training content may be booted through the manipulation input, and the training content may include training simulation that identically reconstructs the actual manufacturing process of the cylindrical battery. According to an embodiment, the battery manufacturing process may include cylindrical processes sequentially performed to manufacture the cylindrical battery. Alternatively, the battery manufacturing process may include a process for manufacturing types of batteries other than the cylindrical battery.

The main simulation device 122 of the simulation system 120 may be configured to provide the training content to the operator 110 through interaction with the operator 110. For example, in the case of a cathode tab welding (CTW) process for manufacturing the cylindrical battery, the operator 110 may indirectly experience a process of forming a cathode tab through welding through the training content. According to an embodiment, the operator 110 may apply the touch and drag inputs to the main simulation device 122, and thus the main simulation device 122 may display a process of welding the cathode tab. According to an embodiment, the input to the equipment manipulation panel in the actual manufacturing line may be implemented as an input to the interface panel 121, and an operation of the operator 110, which should be directly performed in the actual manufacturing line, may be implemented by the input to the main simulation device 122.

The display 123 of the simulation system 120 may be configured to display detailed images of the manufacturing process based on the characteristics of the training content. For example, in a quality inspection content through dimensional measurement, a detailed image about the dimensional measurement of a measurement object may be displayed on the display 123, and in the case of the CTW process, an enlarged image of a cathode tab portion on which welding is being performed may be displayed on the display 123.

According to an embodiment, the battery manufacturing process may include the cylindrical processes sequentially performed to manufacture the cylindrical battery, and the training content may include any one of a process guide content, an equipment operation content, a quality inspection content, and a process condition adjustment content for the cylindrical processes. The process guide content may explain the cylindrical processes and include a content about virtually experiencing assembly procedures of the cylindrical processes through simulation. The equipment operation content may include a content about maintenance of a plurality of process equipment required to perform the cylindrical processes. The quality inspection content may include a content about virtually experiencing the process of inspecting the quality of process results of the cylindrical processes. The process condition adjustment content may include a content about adjusting process conditions or process requirements required for the cylindrical processes and inspecting changes in process results accordingly. According to an embodiment, the battery manufacturing process may include a process for manufacturing types of batteries other than the cylindrical battery.

According to an embodiment, the main simulation device 122 of the simulation system 120 may be configured to display, to the operator 110, a first state in which virtual cylindrical parts assembled in the cylindrical processes are changed in response to the touch input of the operator 110 to provide a process guide content, and the display 123 of the simulation system 120 may be configured to display invisible areas of the virtual cylindrical parts in the first state. When the operator 110 moves the virtual cylindrical parts through the touch and drag inputs, the first state about the positional relationship or coupling relationship of the virtual cylindrical parts may be changed and visually displayed to the operator 110. In the first state, an image in the invisible area that is not displayed externally may be displayed through the display 123. According to an embodiment, the process guide content may include the provision of a guide text that explains the cylindrical processes.

According to an embodiment, the main simulation device 122 of the simulation system 120 may be configured to evaluate the assembly quality of the virtual cylindrical parts based on the first state and calculate an expected defect rate of the cylindrical battery based on the assembly quality of each of the cylindrical processes. The first state may represent the positional relationship or coupling relationship of the virtual cylindrical parts, and thus the assembly quality may be evaluated. Given multiple assembly quality of multiple cylindrical processes, an expected defect rate of the final resulting cylindrical battery may be calculated therefrom. According to an embodiment, an AI model configured to evaluate the assembly quality based on the first state and calculate the expected defect rate based on the assembly quality may be used.

According to an embodiment, the main simulation device 122 of the simulation system 120 may be configured to select a representative defect case among the cylindrical processes based on the assembly quality and the expected defect rate and provide an additional training content for the representative defect case to the operator 110. For example, based on cumulative statistical data of the result data provided by the process guide content to the operator 110, a specific process among the cylindrical processes may continuously show low assembly quality, or when the specific process greatly affects the expect defect rate, the corresponding process may be selected as the representative defect case.

According to an embodiment, the cumulative statistical data of the result data provided by the training content of the simulation system 120 to the operator 110 may be managed by the simulation management server 130. The simulation management server 130 may receive the result data from the simulation system 120 every time the training content is provided and record the same in a database. The simulation management server 130 may update the type or content of the training content, a defect case training content, etc. based on the recorded data and provide update information to the simulation system 120.

According to an embodiment, the main simulation device 122 of the simulation system 120 may be configured to display, to the operator 110, a second state in which a plurality of virtual cylindrical equipment configured to perform cylindrical processes are operated in response to the touch input of the operator 110 to provide an equipment operation content, and the display 123 of the simulation system 120 may be configured to display invisible areas of the virtual cylindrical parts in the second state. For example, the second state about the operation of the plurality of virtual cylindrical equipment may be changed through the touch or drag input of the operator 110, and the visible and invisible areas of the plurality of virtual cylindrical equipment may be displayed in the second state. According to an embodiment, the task of replacing consumables of the plurality of virtual cylindrical equipment may be trained through the equipment operation content.

According to an embodiment, the main simulation device 122 of the simulation system 120 may be configured to display, to the operator 110, a third state in which a sample of the assembly resulting products of the virtual cylindrical parts assembled in the cylindrical processes is collected in response to the touch input of the operator 110 to provide a quality inspection content, and the display 123 of the simulation system 120 may be configured to display a quality determination area of the sample inspected to inspect the quality of the assembly resulting products. For example, in the CTW process, a welding resulting sample may be collected through the input of the operator 110 to inspect the welded state of the cathode, and a welded portion of the sample may be displayed in detail through the display 123.

According to an embodiment, the main simulation device 122 of the simulation system 120 may be configured to display, to the operator 110, changes in operation forms of the plurality of virtual cylindrical equipment according to changes in process conditions of the cylindrical processes set in response to the touch input of the operator 110 to provide a process condition adjustment content, and the display 123 of the simulation system 120 may be configured to display changes in process resulting products of the cylindrical processes according to the changes in operation forms. For example, in a process of forming a jelly roll of a cylindrical battery, when the strength of winding the assembly of a positive electrode, a negative electrode, and a separator is increased or decreased, how a diameter or shape of the jelly roll is changed due to such a change may be displayed.

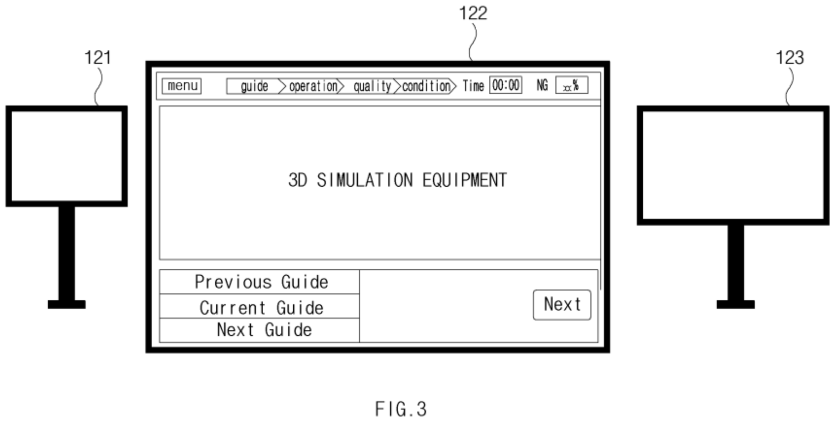

FIG. 3 may show a form in which the elements constituting the simulation system according to some embodiments are implemented.

Referring to FIG. 3, in the simulation system 120, the interface panel 121 may be disposed at a left of the main simulation device 122, and the display 123 may be disposed at a right of the main simulation device 122. However, the present document is not limited thereto, and a different arrangement structure may be applied depending on a body structure or movement line of the operator 110.

The operator 110 may generate a manipulation input for manipulating the plurality of virtual equipment of the main simulation device 122 on the interface panel 121 at the left, train the simulation content through the touch and drag inputs to the main simulation device 122 at a central portion, and confirm a detailed image of the manufacturing process through the display 123 at the right.

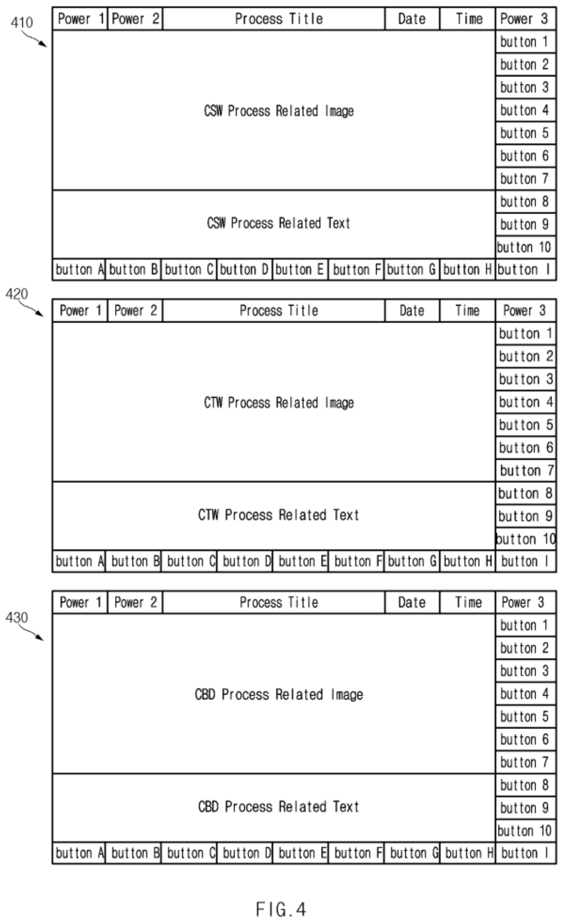

FIG. 4 may show a form in which an interface panel according to some embodiments is operated.

Referring to FIG. 4, a first capture 410, a second capture 420, and a third capture 430 about an operating form of the interface panel 121 are shown. As shown, the interface panel 121 may be configured in the same form as the manipulation panel used in an actual process line to provide functions for manipulating a plurality of process equipment.

According to an embodiment, the first capture 410 may correspond to the CSW process among the cylindrical processes sequentially performed to manufacture the cylindrical battery, the second capture 420 may correspond to the CTW process among the cylindrical processes, and the third capture 430 may correspond to a CBD process among the cylindrical processes.

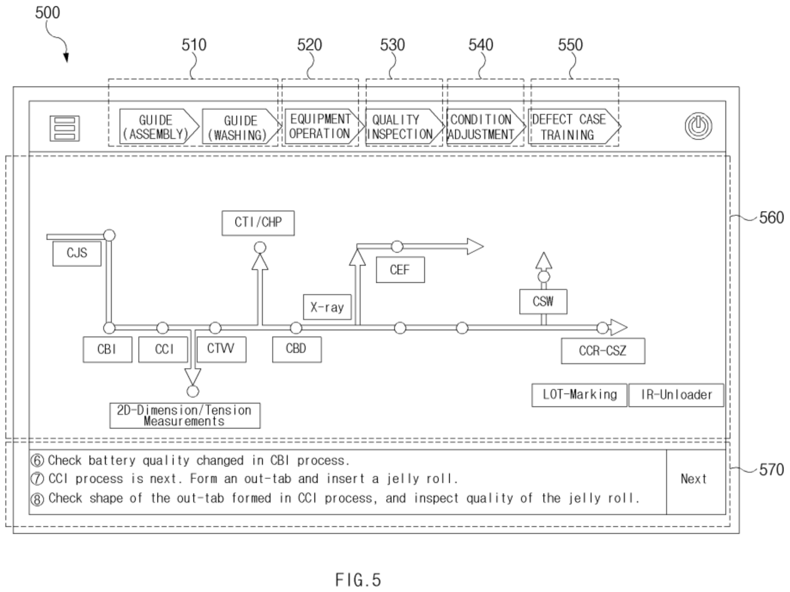

FIG. 5 may show a form in which a main simulation device according to some embodiments is operated.

Referring to FIG. 5, an operation screen 500 exemplifying the operating form of the main simulation device 122 may be shown. The operation screen 500 may be partitioned into an upper screen, a central screen, and a lower screen.

The upper screen of the operation screen 500 may display a current stage of the training content that reproduces the cylindrical processes. According to an embodiment, the upper screen may display a process guide content 510, an equipment operation content 520, a quality inspection content 530, a process condition adjustment content 540, and a defect case training content 550. The process guide content 510 may include an assembly process guide and a cleaning process guide.

The central screen of the operation screen 500 may display a simulation content in a three dimension manner. For example, the central screen may display a process flowchart 560 and display a progress order of the cylindrical processes. In particular, the central screen may display a simulation image of assembling virtual cylindrical parts in each cylindrical process. When the operator 110 drags one part to another in the simulation image, the central screen may display the assembly state of parts determined according to the accuracy of the drag input.

The lower screen of the operation screen 500 may provide a guide message to the operator 110. For example, when the process flowchart 560 is displayed, a guide text 570 explaining each cylindrical process may be provided through the lower screen. Alternatively, when the simulation image is displayed on the central screen, the lower screen may display precautions for each cylindrical process.

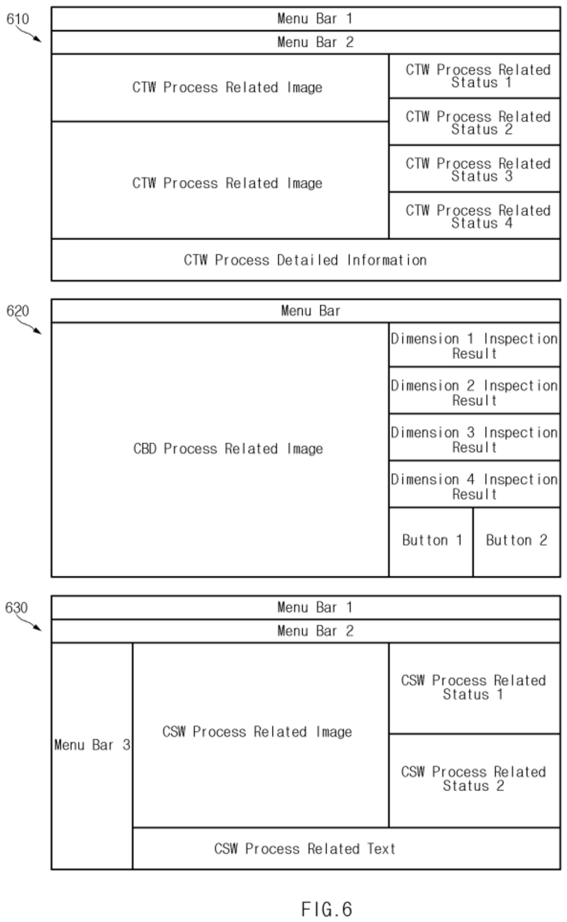

FIG. 6 may show a form in which a display according to some embodiments is operated.

Referring to FIG. 6, a first capture 610, a second capture 620, and a third capture 630 about an operating form of the display 123 may be shown. As shown, the display 123 may display a detailed image about a simulation content executing on the main simulation device 122.

According to an embodiment, the first capture 610 is a quality inspection screen of the CSW process among the cylindrical processes sequentially performed to manufacture the cylindrical battery and may display a detailed image of the welding area. The second capture 620 is a two-dimensional dimension measurement screen of the CBD process among the cylindrical processes and may display a measurement state of a measurement object. The third capture 630 may display an image about welding control of the CSW process among the cylindrical processes.

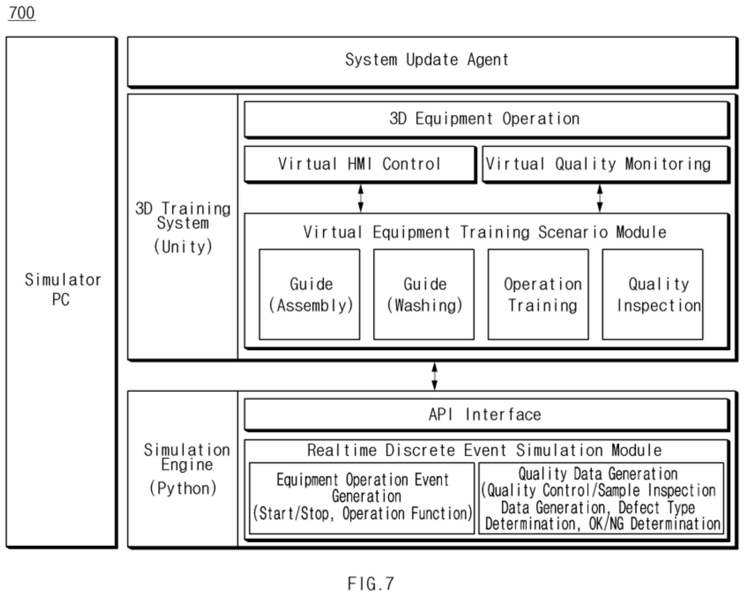

FIG. 7 may show a structure of the main simulation device according to some embodiments.

Referring to FIG. 7, a structure of the main simulation device 122 may be shown as a block diagram 700. According to the block diagram 700, the main simulation device 122 may include a system update agent, a 3D training system, and a simulation engine.

The system update agent may update the training content of the main simulation device 122. According to an embodiment, the system update agent may update the version of the training content, the firmware of the main simulation device 122, etc. based on the update information provided from the simulation management server 130.

The 3D training system may be developed using a Unity engine. The 3D training system may implement a 3D equipment operation and execute a virtual equipment training scenario module through virtual HMI control and virtual quality monitoring. The virtual equipment training scenario module may include a process guide, equipment operation training, quality inspection, etc.

A simulation engine may be developed using a programming language such as Python. The simulation engine may include an API interface for interacting with the 3D training system. The simulation engine may manage events of the simulation through a real-time discrete event simulation module. The events of the simulation may include equipment operation events such as start, stop, and operating functions, and quality-related events such as quality control, sample inspection, defect type determination, and OK/NG determination.

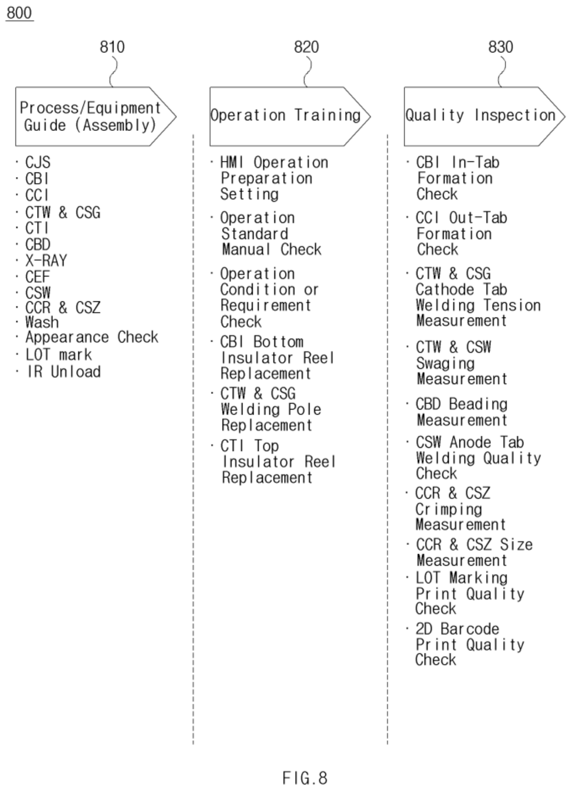

FIG. 8 may show details of a training content according to some embodiments.

Referring to FIG. 8, details of a training content 800 provided through the simulation system 120 may be shown. The training content 800 may include a process guide content 810, an equipment operation content 820, and a quality inspection content 830.

The process guide content 810 may include an assembly guide of the cylindrical processes sequentially performed to manufacture the cylindrical battery. According to an embodiment, the cylindrical processes may include a CJS process, a CBI process, a CCI process, CTW and CSG processes, a CTI process, a CBD process, an X-RAY process, a CEF process, a CSW process, CCR and CSZ processes, a cleaning process, an exterior inspection process, a LOT marking process, and an IR unloading process.

The equipment operation content 820 may include operation training of the plurality of virtual cylindrical equipment configured to perform the cylindrical processes. According to an embodiment, the equipment operation content 820 may include HMI operation preparation settings, task standard confirmation, process conditions/requirements confirmation, etc. According to an embodiment, the equipment operation content 820 may include equipment maintenance such as CBI lower insulator reel replacement, CTW and CSG welding rod replacement, and CTI upper insulator reel replacement.

The quality inspection content 830 may include quality inspection of the assembly resulting products of the virtual cylindrical parts assembled in the cylindrical processes. According to an embodiment, the quality check content 830 may include CBI in-tab formation check, CCI out-tab formation check, tensile strength measurement of CTW and CSG anode tab welding, CTW and CSG swagging dimension measurement, CBD beading dimension measurement, CSW cathode tab welding quality check, CCR and CSZ crimping dimension measurement, CCR and CSZ crimping measurement, CCR and CSZ size measurement, LOT marking print quality check, 2D barcode print quality check, etc.

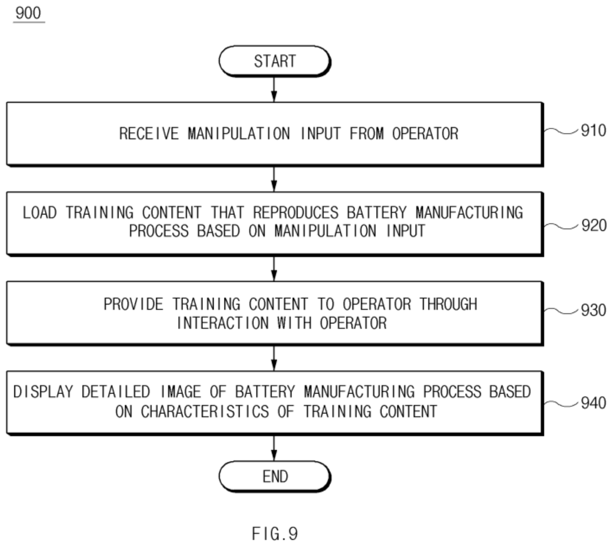

FIG. 9 may show operations constituting an operating method of the simulation system according to some embodiments.

Referring to FIG. 9, an operating method 900 of a simulation system may include operations 910 to 940. However, the present document is not limited thereto, and some operations may be omitted or general-purpose operations may be added, and operations of the operating method 900 of the simulation system 120 may be executed in a different order from the shown order.

The operating method 900 of the simulation system 120 may include operations performed in time series by the simulation system 120. Therefore, even when contents are omitted below, the above-described contents for the simulation system 120 may be applied to the operating method 900 in the same manner.

Operations 910 to 940 of the operating method 900 of the simulation system 120 may be performed by the interface panel 121, the main simulation device 122, and the display 123 of the simulation system 120.

In operation 910, the simulation system 120 may receive a manipulation input from an operator.

In operation 920, the simulation system 120 may load the training content that reproduces the battery manufacturing process based on the manipulation input.

In operation 930, the simulation system 120 may provide the training content to the operator through interaction with the operator.

In operation 940, the simulation system 120 may display a detailed image of the battery manufacturing process based on the characteristics of the training content.

According to an embodiment, the operating method 900 of the simulation system may be implemented in the form of a computer program stored in a computer-readable storage medium. That is, the computer program may include commands for implementing the operating method 900 of the simulation system 120, and the commands of the program may be stored in the computer-readable storage medium. The computer program may include a mobile application.

According to an embodiment, the computer-readable recording medium may include magnetic media such as a hard disk, a floppy disk, and a magnetic tape, optical media such as a CD-ROM and a DVD, and magneto-optical media such as a floptical disk, and hardware devices specifically configured to store and execute program commands, such as a ROM, a RAM, and a flash memory. The computer program commands may include machine language code generated by a compiler and high-level language code that may be executed by a computer using an interpreter, etc.

The terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present document without departing from the essential characteristics of the embodiments disclosed herein. Therefore, the embodiments disclosed herein are not intended to limit the technical spirit disclosed herein, but for illustrative purpose, and the scope of the technical spirit disclosed herein is not limited by these embodiments. The scope of the technical spirit disclosed herein should be construed by the appended claims, and all technical spirits within the equivalent range should be construed as being included in the scope of the present document.

### [DESCRIPTION OF REFERENCE NUMERALS]

| | | | |
|---|---|---|---|
| 100: | simulation management system | 110: | operator |
| 120: | simulation system | 121: | interface panel |
| 122: | main simulation device | 123: | display |
| 130: | simulation management server | | |

## Claims

1. A simulation system comprising:
an interface panel configured to receive a manipulation input from an operator;
a main simulation device configured to load a training content that reproduces a battery manufacturing process based on the manipulation input and provide the training content to the operator through interaction with the operator; and
a display configured to display a detailed image of the battery manufacturing process based on characteristics of the training content.

2. The simulation system of claim 1, wherein the battery manufacturing process includes cylindrical processes sequentially performed to manufacture a cylindrical battery, and
the training content includes at least any one of a process guide content, an equipment operation content, a quality inspection content, and a process condition adjustment content for the cylindrical processes.

3. The simulation system of claim 2, wherein the main simulation device is configured to display, to the operator, a first state in which virtual cylindrical parts assembled in the cylindrical processes are changed in response to a touch input of the operator to provide the process guide content, and
the display is configured to display invisible areas of the virtual cylindrical parts in the first state.

4. The simulation system of claim 3, wherein the main simulation device is configured to evaluate assembly quality of the virtual cylindrical parts based on the first state and calculate an expected defect rate of the cylindrical battery based on the assembly quality of each of the cylindrical processes.

5. The simulation system of claim 4, wherein the main simulation device is configured to select a representative defect case among the cylindrical processes based on the assembly quality and the expected defect rate and provide the operator with an additional training content for the representative defect case.

6. The simulation system of claim 2, wherein the main simulation device is configured to display, to the operator, a second state in which a plurality of virtual cylindrical equipment configured to perform the cylindrical processes are operated in response to a touch input of the operator to provide the equipment operation content, and
the display is configured to display invisible areas of the plurality of virtual cylindrical equipment in the second state.

7. The simulation system of claim 2, wherein the main simulation device is configured to display, to the operator, a third state in which a sample of assembly resulting products of virtual cylindrical parts assembled in the cylindrical processes is collected in response to a touch input of the operator to provide the quality inspection content, and
the display is configured to display a quality determination area of the sample inspected to inspect quality of the assembly resulting products.

8. The simulation system of claim 2, wherein the main simulation device is configured to display changes in operation forms of a plurality of virtual cylindrical equipment to the operator according to changes in process conditions of the cylindrical processes set in response to a touch input of the operator to provide the process condition adjustment content, and
the display is configured to display changes in process resulting product of the cylindrical processes according to the changes in operation forms.

9. An operating method of a simulation system, comprising following steps:
receiving a manipulation input from an operator;
loading a training content that reproduces a battery manufacturing process based on the manipulation input;
providing the training content to the operator through interaction with the operator; and
displaying a detailed image of the battery manufacturing process based on characteristics of the training content.

10. The operating method of claim 9, wherein the battery manufacturing process includes cylindrical processes sequentially performed to manufacture a cylindrical battery, and
the training content includes at least any one of a process guide content, an equipment operation content, a quality inspection content, and a process condition adjustment content for the cylindrical processes.

11. The operating method of claim 10, wherein the step of providing of the training content includes displaying, to the operator, a first state in which virtual cylindrical parts assembled in the cylindrical processes are changed in response to a touch input of the operator to provide the process guide content, and
the step of displaying of the detailed image includes displaying invisible areas of the virtual cylindrical parts in the first state.

12. The operating method of claim 11, wherein the step of providing of the training content includes:
evaluating assembly quality of the virtual cylindrical parts based on the first state; and
calculating an expected defect rate of the cylindrical battery based on the assembly quality of each of the cylindrical processes.

13. The operating method of claim 12, wherein the step of providing of the training content further includes following steps:
selecting a representative defect case among the cylindrical processes based on the assembly quality and the expected defect rate; and
providing an additional training content for the representative defect case to the operator.

14. The operating method of claim 10, wherein the step of providing of the training content includes displaying, to the operator, a second state in which a plurality of virtual cylindrical equipment configured to perform the cylindrical processes are operated in response to a touch input of the operator to provide the equipment operation content, and
the step of displaying of the detailed image includes displaying invisible areas of the plurality of virtual cylindrical equipment in the second state.

15. The operating method of claim 10, wherein the step of providing of the training content includes displaying, to the operator, a third state in which a sample of assembly resulting products of virtual cylindrical parts assembled in the cylindrical processes is collected in response to a touch input of the operator to provide the quality inspection content, and
the step of displaying of the detailed image includes displaying a quality determination area of the sample inspected to inspect quality of the assembly resulting products.

16. The operating method of claim 10, wherein the step of providing of the training content includes displaying changes in operation forms of a plurality of virtual cylindrical equipment to the operator according to changes in process conditions of the cylindrical processes set in response to a touch input of the operator to provide the process condition adjustment content, and
the step of displaying of the detailed image includes displaying changes in process resulting products of the cylindrical processes according to the changes in operation forms.

17. A simulation management system comprising:
a simulation system configured to receive a manipulation input from an operator, load a training content that reproduces a battery manufacturing process based on the manipulation input, provide the training content to the operator through interaction with the operator, and display a detailed image of the battery manufacturing process based on characteristics of the training content; and
a simulation management server configured to manage the training content.

18. The simulation management system of claim 17, wherein the battery manufacturing process includes cylindrical processes sequentially performed to manufacture a cylindrical battery, and
the training content includes at least any one of a process guide content, an equipment operation content, a quality inspection content, and a process condition adjustment content for the cylindrical processes.

19. The simulation management system of claim 18, wherein the simulation system is configured to display, to an operator, a first state in which virtual cylindrical parts assembled in the cylindrical processes are changed in response to a touch input of the operator to provide the process guide content and display invisible areas of the virtual cylindrical parts in the first state.

20. The simulation management system of claim 19, wherein the simulation system is configured to evaluate assembly quality of the virtual cylindrical parts based on the first state and calculate an expected defect rate of the cylindrical battery based on the assembly quality of each of the cylindrical processes.
